(19) Europäisches Patentamt / European Patent Office / Office européen des brevets

(11) **EP 3 333 734 A1**

(12) **EUROPEAN PATENT APPLICATION**

(43) Date of publication:
**13.06.2018 Bulletin 2018/24**

(51) Int Cl.:
**G06F 17/50** *(2006.01)*

(21) Application number: **16202854.2**

(22) Date of filing: **08.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Stichting IMEC Nederland**
**5656 AE  Eindhoven (NL)**

(72) Inventors:
• LIU, Bo
  **3001 Leuven (BE)**
• GEMMEKE, Tobias
  **3001 Leuven (BE)**

(74) Representative: **Gevers Patents**
**Intellectual Property House**
**Holidaystraat 5**
**1831 Diegem (BE)**

(54) **A COMPUTER-IMPLEMENTED METHOD FOR GENERATING AN ADVANCED-ON-CHIP-VARIATION TABLE OF A CELL AND A NON-TRANSITORY COMPUTER READABLE MEDIUM FOR DOING THE SAME**

(57)    A computer-implemented method for generating an advanced-on-chip-variation (AOCV) table of a cell. The AOCV table contains the delay of the cell which is derived from a variation factor of a plurality of input patterns of the cell. The variation factor of each input pattern is derived from variation factors of a plurality basic elements. The variation factors of the basic elements are obtained as the result of a number of simulations. However, the number of basic elements is far lower than the number of possible cells. As such, the number of simulations that need to be performed is reduced drastically which results in a faster method.

*Fig. 2*

**Description**

<u>Technical field</u>

The present invention relates to a computer-implemented method for generating an advanced-on-chip-variation (AOCV) table of a cell. The present invention is also related to a non-transitory computer readable medium for generating an AOCV table of a cell.

<u>Background art</u>

An AOCV table is a multidimensional matrix representing the delay of a cell, i.e. the time needed for a signal to cross the cell. The AOCV table can include both the minimum time needed for the signal to cross the cell, i.e. the best-case scenario, and the maximum time needed for the signal to cross the cell, i.e. the worst-case scenario. The AOCV table contains the delay of the cell for different process-voltage-temperature (PVT) corners, different logic depths and different transition combinations which is also linked to the rise and fall transitions of the input and output pins of the cell.

Currently, an AOCV table for a cell is generated by performing multiple Monte-Carlo simulations. Specifically, a Monte-Carlo simulation is performed for the cell for each PVT corner, for each logic depth and for each transition combination. A known problem with Monte-Carlo simulations is that they require large amounts of computer resources and are very time-consuming, as the same cell, under the different conditions, needs to be simulated multiple times to obtain a distribution of the cell under those conditions. Moreover, considering that at least 10 PVT corners need to be simulated and, on average, around 40 logic depths, it is clear that generating an AOCV table requires very long simulation times together with the tie-up of computer resources during simulation.

Another disadvantage of the known method is that the Monte-Carlo simulations become more complex for more complex cells.

Furthermore, an AOCV table is normally part of an AOCV file which contains an AOCV table for each cell in a standard library of cells. Usually, such a standard library contains between 800 and 1200 cells. As each AOCV table is a multidimensional matrix, it is clear that such an AOCV file requires a high memory storage capacity.

**Summary of the disclosure**

It is an object of the present disclosure to provide a faster computer-implemented method for generating an AOCV table of a cell.

This object is achieved by a computer-implemented method for generating an advanced-on-chip-variation (AOCV) table of a cell, the method comprising the steps of:

a) simulating a variation factor, $\sigma/\mu$, for each of a plurality of basic elements;
b) determining a plurality of input patterns of the cell;
c) associating each input pattern with a basic structure that represents the cell for said input pattern;
d) deriving a variation factor, $\sigma/\mu$, of the basic structure of each input pattern based on the variation factors of the plurality of basic elements;
e) deriving a delay of the cell based on the variation factor of each of the plurality of input patterns; and
f) storing the delay of the cell in a multidimensional matrix that forms the AOCV table of the cell.

The delay of the cell is derived from the variation factor of each of the plurality of input patterns, which variation factors are in turn derived from the variation factors of the basic elements, which are obtained as the result of a number of simulations. However, the number of basic elements is far lower than the number of possible cells, e.g. 10 to 20 basic elements and 800 to 1200 cells. As such, the number of simulations that needs to be performed is reduced drastically which results in a faster method.

In an embodiment, step a) comprises the steps of: a1) obtaining a distribution of a delay of each basic element; a2) deriving, from the distribution, a mean factor, $\mu$, for each basic element; and a3) deriving, from the distribution, a standard deviation factor, $\sigma$, for each basic element. Preferably, step a1) comprises the step of performing a Monte-Carlo simulation for each basic element to obtain the distribution of the delay.

In an embodiment, step d) comprises the step of deriving fitting parameters, $\rho_P$, $\rho_S$, based on the variation factors of the basic elements. Preferably, step d) further comprises the steps of: retrieving the variation factor of a single transistor, $(\sigma/\mu)_{1,1}$, and the fitting parameters, $\rho_P$, $\rho_S$; and calculating the variation factor of the basic structure using the formula:

$$\left(\frac{\sigma}{\mu}\right)_{N_S,N_P} = \left(\frac{\sigma}{\mu}\right)_{1,1} N_P^{\rho_P} N_S^{\rho_S}$$

where $N_S$ indicates the number of active serial transistors in the basic structure and $N_P$ denotes the number of active parallel transistors in the basic structure.

In an embodiment, step e) comprises the steps of: determining the highest value of the of variation factor of the plurality of input patterns; and calculating the delay as a maximum delay time using the formula:

$$delay_{max} = 1 + n\left(\frac{\sigma}{\mu}\right)$$

where n is a pre-set natural number.

In this embodiment, the maximum delay is stored in the AOCV table which enables determining the worst-case scenario of a chip design, the chip including at least one cell.

In an alternative embodiment, step e) comprises the steps of: determining the lowest value of the of variation factor of the plurality of input patterns; and calculating the delay as a minimum delay time using the formula:

$$delay_{min} = 1 - n\left(\frac{\sigma}{\mu}\right)$$

where n is a pre-set natural number.

In this alternative embodiment, the minimum delay is stored in the AOCV table which enables a chip designer to design a chip that needs to be slow enough, i.e. a chip in which a specific signal cannot cross a cell 100 too fast.

In an embodiment, said basic structure comprises at least a first and a second basic structure, and in that step d) comprises the steps of: deriving a first variation factor of the first basic structure; deriving a second variation factor of the second basic structure; and deriving the variation factor of the basic structure based on the first and the second variation factor.

It is another object of the present disclosure to provide a non-transitory computer readable medium that can be used to generate an AOCV table of cell faster.

This object is achieved by a non-transitory computer readable medium storing a program for causing a computer to execute the steps of the computer-implemented method as described above.

The non-transitory computer readable medium has the same advantages as the computer-implemented method discussed above.

### Brief description of the drawings

The invention will be further elucidated by means of the following description and the appended figures.

Figure 1 shows a cell.
Figure 2 shows a flowchart of the method to generate the variation of the cell of Figure 1.
Figure 3A shows a circuit of an inverter cell.
Figures 3B and 3C show both possible input patterns of the inverter cell of Figure 3A.
Figure 4A shows a circuit of a negative-AND (NAND) cell.
Figures 4B to 4E show the four different possible input patterns of the NAND cell of Figure 4A.
Figure 5A shows a circuit of a more complex cell.
Figures 5B to 5E show a number of different possible input patterns of the cell of Figure 5A.
Figure 6A shows a detailed flowchart of the variation factor calculation step used in the flowchart of Figure 2.
Figure 6B shows a preferred detailed flowchart of the variation factor calculation step used in the flowchart of Figure 2.
Figure 7 shows a detailed flowchart of the delay calculation step used in the flowchart of Figure 2.
Figures 8A to 8K show various basic elements.
Figure 9 shows a system for executing the method to generate the variation of the cell of Figure 1.

### Description of the disclosure

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

As used herein, the term "basic structure" is intended to refer to a single NMOS or PMOS transistor or to specific combinations of NMOS or PMOS transistors.

As used herein, the term "basic element" is intended to refer to a single NMOS or PMOS transistor or to specific combinations of NMOS or PMOS transistors where the variation factor has been determined using known simulation methods. It will be appreciated that the set of basic elements overlaps with the set of basic structures.

As used herein, the term "cell" is intended to refer to a logic cell, also known as a logic gate, which comprises both NMOS and PMOS transistors.

As used herein, the term "transistor group" is intended to refer to one of more transistors forming a functional group within a cell.

As used herein, the term "binary signal" is intended to refer to a signal that has either an ON value or an OFF value (or the value of either '1' or a '0' or any other two suitable values).

As used herein, the term "input pattern of a cell" refers to a set of binary values representing the ON/OFF state of transistors in the cell.

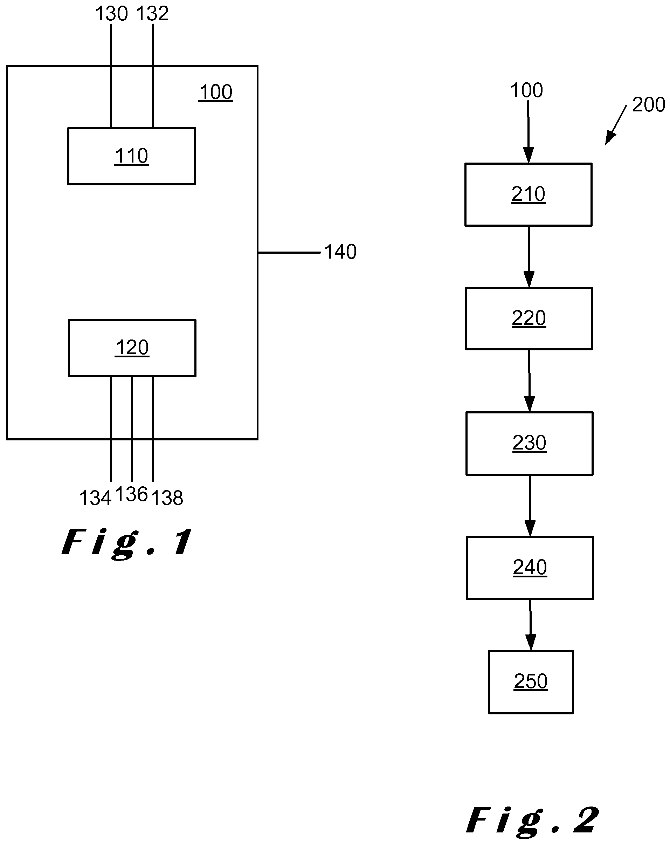

A schematic example of a cell is shown in Figure 1. The cell 100 comprises a PMOS transistor group 110 and an NMOS transistor group 120. There are two inputs 130, 132 for the PMOS transistor group 110 and three inputs 134, 136, 138 for the NMOS transistor group 120. Each of the inputs 130, 132, 134, 136, 138 is a binary signal that is used to control at least one transistor. As such, for a skilled person it is clear that the cell 100 comprises at least two PMOS transistors and at least three NMOS transistors. The cell 100 further comprises an output 140 which, depending on the input signals, provides an appropriate output signal. It will be appreciated that a transistor has four pins, namely: a drain, a source, a gate and a bulk. Usually, the gate is used as an input pin, while the drain or source are connected to one of the vdd/vss and the output and the bulk has dedicated connection.

As used herein, the term "input of a transistor" is intended to refer to the pin of the transistor which is used for the input signal, e.g. usually the gate.

As used herein, the term "output of a transistor" is intended to refer to the pin of the transistor which is used to output a signal, e.g. usually the drain or the source.

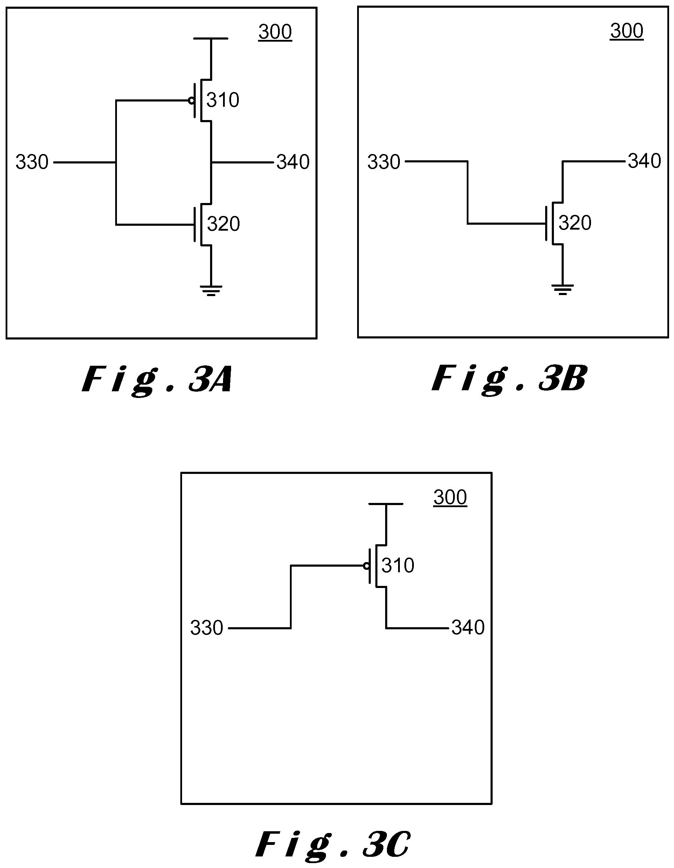

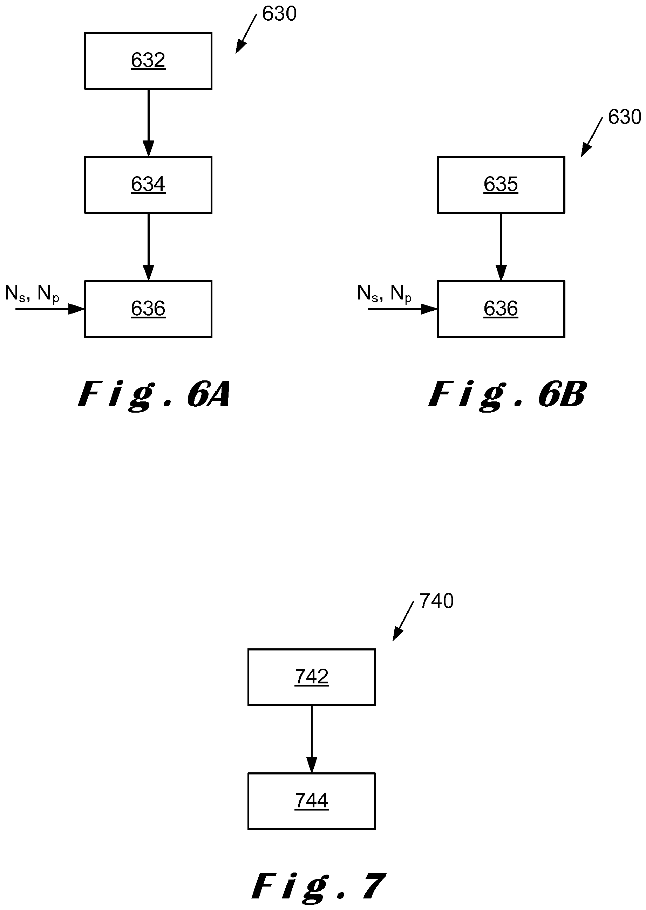

Figure 2 shows a flowchart of the method 200 to generate an AOCV table of the cell 100. In step 210, all possible input patterns of the cell 100 are determined. In the cell 100 shown in Figure 1, there are five binary inputs, therefore, there are 32 possible input patterns. In step 220, each input pattern of the cell 100 is associated with at least one basic structure. Examples of such basic structures will be described below with respect to Figures 3A to 5E. In step 230, for each input pattern of the cell 100, a variation factor, for each PVT corner, is calculated for each basic structure associated with the input pattern. How this variation factor is calculated will be described below with respect to Figures 6A and 6B. In step 240, the delay of the cell 100, for each PVT corner, is determined based on the plurality of variation factors determined in step 230. How this delay is determined will be described below with respect to Figure 7. In step 250, the delay, for each PVT corner, is stored in a multidimensional matrix, i.e. the AOCV table of the cell 100.

In an embodiment, the delay is the maximum time needed for an input signal to cross the cell 100, i.e. the worst-case scenario. This is the most common value found in an AOCV table as it indicates the worst-case scenario of the chip performance.

In an alternative embodiment, the delay is the minimum time needed for a signal to cross the cell 100, i.e. the best-case scenario. This alternative embodiment is useful for a chip that needs to be slow enough, i.e. a chip in which a specific signal cannot cross the cell 100 too fast.

In a further alternative embodiment, the delay includes both the minimum and the maximum time needed for a signal to cross the cell 100.

Figure 3A shows a circuit of an inverter cell 300. The inverter cell 300 comprises a single PMOS transistor 310 that is coupled with a single NMOS transistor 320 sharing a single input 330. The input 330 is such that only one of the transistors 310, 320 is active at the same time. The inverter cell 300 also has an output 340. For this inverter cell 300, there are two different input patterns possible: the input signal is '1' - in which case the PMOS transistor 310 is OFF and the NMOS transistor 320 is ON; and the input signal is '0' - in which case the PMOS transistor 310 is ON and the NMOS transistor 320 is OFF.

Figure 3B shows the first input pattern, i.e. the input is '1', of the inverter cell 300. Because only the NMOS transistor 320 is active in this input pattern, the logic path only comprises a single NMOS transistor 320. Therefore, this first input pattern is associated with a single NMOS transistor as a basic structure, i.e. $N_S=1$ and $N_P=1$, where $N_S$ indicates the number of serial transistors that are ON and $N_P$ denotes the number of parallel transistors that are ON.

Figure 3C shows the second input pattern, i.e. the input is '0', of the inverter cell 300. Because only the PMOS transistor 310 is active in this input pattern, the logic path only comprises a single PMOS transistor 310. Therefore, this second input pattern is associated with a single PMOS transistor as a basic structure, i.e. $N_S=1$ and $N_P=1$.

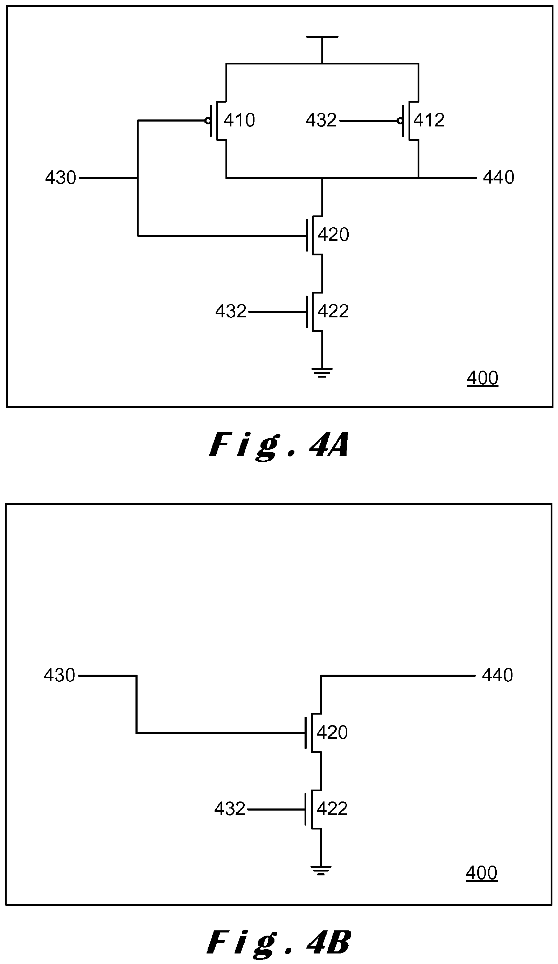

Figure 4A shows a circuit of a negative-AND (NAND) cell 400. The NAND cell 400 comprises two PMOS transistors 410, 412 arranged in parallel and coupled to two NMOS transistor 420, 422 arranged in series. The NAND cell 400 also has an output 440. The PMOS transistor 410 and the NMOS transistor 420 share the same input 430, while the PMOS transistor 412 and the NMOS transistor 422 share the same input 432.

As before, the input 430 is such that only one of the transistors 410, 420 is active at the same time. The same applies to input 432 and transistors 412, 422. For this NAND cell 400 there are four different input patterns possible:

1. both inputs 430, 432 are at '1' - in which case the PMOS transistors 410, 412 are OFF and the NMOS transistors 420, 422 are ON;
2. both inputs 430, 432 are at '0' - in which case the PMOS transistors 410, 412 are ON and the NMOS transistors 420, 422 are OFF;
3. input 430 is at '1' and input 432 is at '0' - in which case the PMOS transistor 410 and the NMOS transistor 422 are OFF and the PMOS transistor 412 and the NMOS transistor 420 are ON; and
4. input 430 is at '0' and input 432 is at '1' - in which case the PMOS transistor 410 and the NMOS transistor 422 are ON and the PMOS transistor 412 and the NMOS transistor 420 are OFF.

Figure 4B shows the first input pattern of the NAND cell 400 (both inputs 430, 432 are at '1'). Because both NMOS transistors 420, 422 are active in this input pattern, the logic path comprises two NMOS transistor in series. Therefore, this input pattern is associated with two serial NMOS transistors as a basic structure, i.e. $N_S=2$ and $N_P=1$.

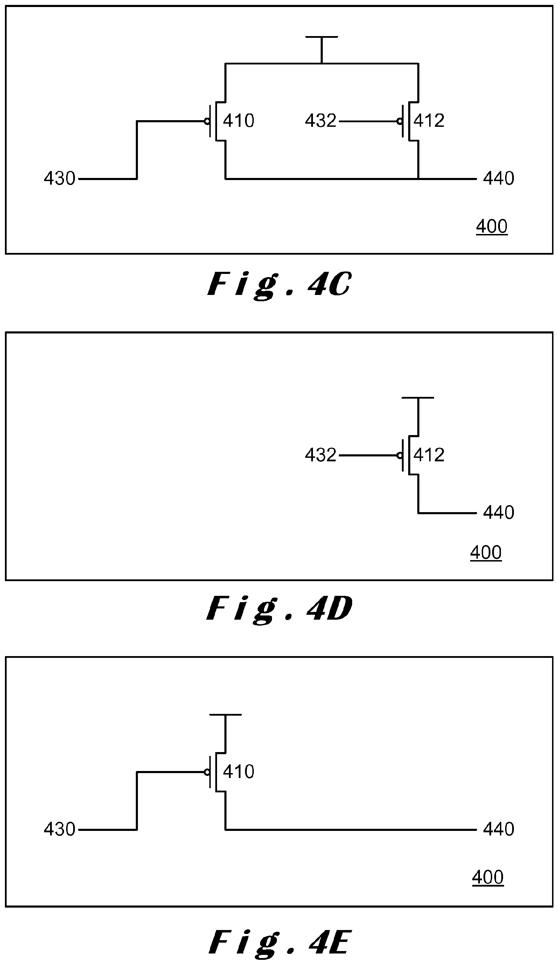

Figure 4C shows the second input pattern of the NAND cell 400 (both inputs 430, 432 are at '0'). Because both PMOS transistors 410, 412 are active in this input pattern, the logic path comprises two PMOS transistor in parallel. Therefore, this input pattern is associated with two parallel PMOS transistors as a basic structure, i.e. $N_S=1$ and $N_P=2$.

Figure 4D shows the third input pattern of the NAND cell 400 (input 430 is '1' and input 432 is at '0'). This input pattern is associated with a single PMOS transistor as a basic structure, i.e. $N_S=1$ and $N_P=1$.

Figure 4E shows the fourth input pattern of the NAND cell 400 (input 430 is at '0' and input 432 is at '1'). This input pattern is also associated with a single PMOS transistor as a basic structure, i.e. $N_S=1$ and $N_P=1$.

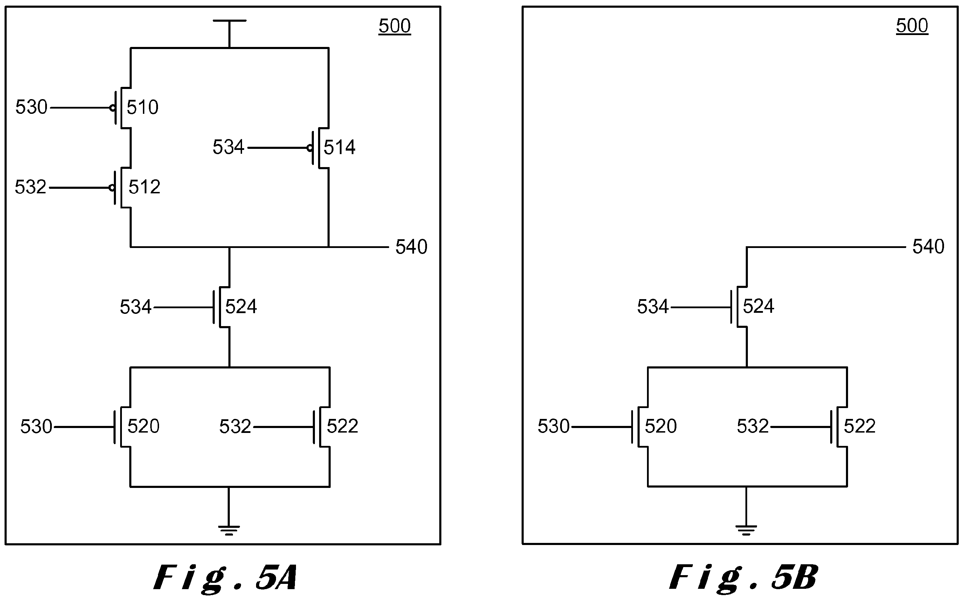

Figure 5A shows a circuit of a more complex cell 500. The cell 500 comprises three PMOS transistors 510, 512, 514 and three NMOS transistor 520, 522, 524. The PMOS transistor 510 and the NMOS transistor 520 share the same input 530, the PMOS transistor 512 and the NMOS transistor 522 share the same input 532, and the PMOS transistor 514 and the NMOS transistor 524 share the same input 534. PMOS transistors 510 and 512 are arranged in series but in parallel with PMOS transistor 514. The PMOS transistors are connected to NMOS transistor 524 which is in series with PMOS transistors 520 and 522 which are arranged in parallel. The cell 500 also has an output 540.

As before, the inputs 530, 532, 534 are such that only one of the coupled transistors 510, 520; 512, 522; 514, 524 are active at the same time. For this cell 500, there are eight different input patterns possible:

1. all inputs 530, 532, 534 are at '1' - in which case the PMOS transistors 510, 512, 514 are OFF and the NMOS transistors 520, 522, 524 are ON;
2. all inputs 530, 532, 534 are at '0' - in which case the PMOS transistors 510, 512, 514 are ON and the NMOS transistors 520, 522, 524 are OFF;
3. input 530 is at '1' and inputs 532, 534 are at '0' - in which case the PMOS transistor 510 and the NMOS transistors 522, 524 are OFF and the PMOS transistors 512, 514 and the NMOS transistor 520 are ON;

4. input 530 is at '0' and inputs 532, 534 are at '1' - in which case the PMOS transistor 510 and the NMOS transistors 522, 524 are ON and the PMOS transistors 512, 514 and the NMOS transistor 520 are OFF;

5. inputs 530, 532 are at '1' and input 534 is at '0' - in which case the PMOS transistors 510, 512 and the NMOS transistor 524 are OFF and the PMOS transistor 514 and the NMOS transistors 520, 522 are ON;

6. inputs 530, 532 are at '0' and input 534 is at '1' - in which case the PMOS transistors 510, 512 and the NMOS transistor 524 are ON and the PMOS transistor 514 and the NMOS transistors 520, 522 are OFF;

7. inputs 530, 534 are at '1' and input 532 is at '0' - in which case the PMOS transistors 510, 514 and the NMOS transistor 522 are OFF and the PMOS transistor 512 and the NMOS transistors 520, 524 are ON; and

8. inputs 530, 534 are at '0' and input 532 is at '1' - in which case the PMOS transistors 510, 514 and the NMOS transistor 522 are ON and the PMOS transistor 512 and the NMOS transistors 520, 524 are OFF. Figure 5B shows the first input pattern of the cell 500 (all inputs 530, 532, 534 are at '1'). Because all NMOS transistors 520, 522, 524 are active in this input pattern, the logic path comprises three NMOS transistors partly in series and partly in parallel. Therefore, this input pattern is associated with two basic structures, namely two parallel NMOS transistors as a basic structure, i.e. $N_P=2$, linked in series with another NMOS transistor as a basic structure, i.e. $N_S=2$. As will be described below, the variation factor of this input pattern will be determined in a two-step calculation.

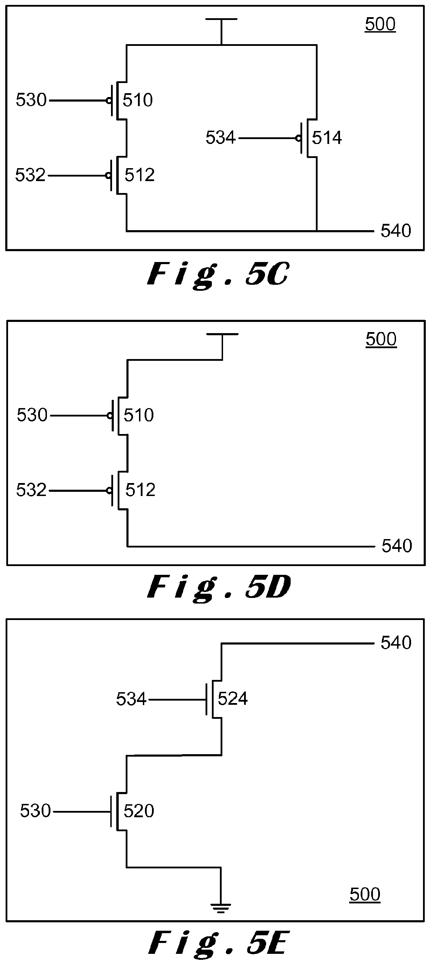

Figure 5C shows the second input pattern of the cell 500 (all inputs 530, 532, 534 are at '0'). Because all PMOS transistors 510, 512, 514 are active in this input pattern, the logic path comprises three PMOS transistors partly in series and partly in parallel. Therefore, this input pattern is associated with two basic structures, namely two parallel PMOS transistors as a basic structure, i.e. $N_P=2$, one of which is formed by two PMOS transistors in series as a basic structure, i.e. $N_S=2$. As with the first input pattern illustrated in Figure 5B, the variation factor of this second input pattern will also be determined in a two-step calculation.

Figure 5D shows the sixth input pattern of the cell 500 (inputs 530, 532 are at '0' and input 534 is at '1'). This input pattern is associated with two serial PMOS transistors as a basic structure, i.e. $N_S=2$ and $N_P=1$.

Figure 5E shows the seventh input pattern of the cell 500 (inputs 530, 534 are at '1' and input 532 is at '0'). This input pattern is associated with two serial NMOS transistors as a basic structure, i.e. $N_S=2$ and $N_P=1$.

Using the same technique, the third input pattern (input 530 is at '1' and inputs 532, 534 are at '0'), the fifth input pattern (inputs 530, 532 are at '1' and input 534 is at '0'), and the eighth input pattern (inputs 530, 534 are at '0' and input 532 is at '1') are associated with a single PMOS transistor as a basic structure, i.e. $N_S=1$ and $N_P=1$; and the fourth input pattern is associated with two serial NMOS transistor as a basic structure, i.e. $N_S=2$ and $N_P=1$.

The examples given above have only shown input patterns that were associated with a single type of basic structures, i.e. either only NMOS transistors or PMOS transistors. However, it will readily be appreciated that there also exist cells for which an input pattern has both a PMOS basic structure and an NMOS basic structure, e.g. a buffer cell. Furthermore, it will be readily appreciated that that a single input pattern can also be associated with multiple basic structures of the same type, see for example the input patterns illustrated in Figures 5B and 5C.

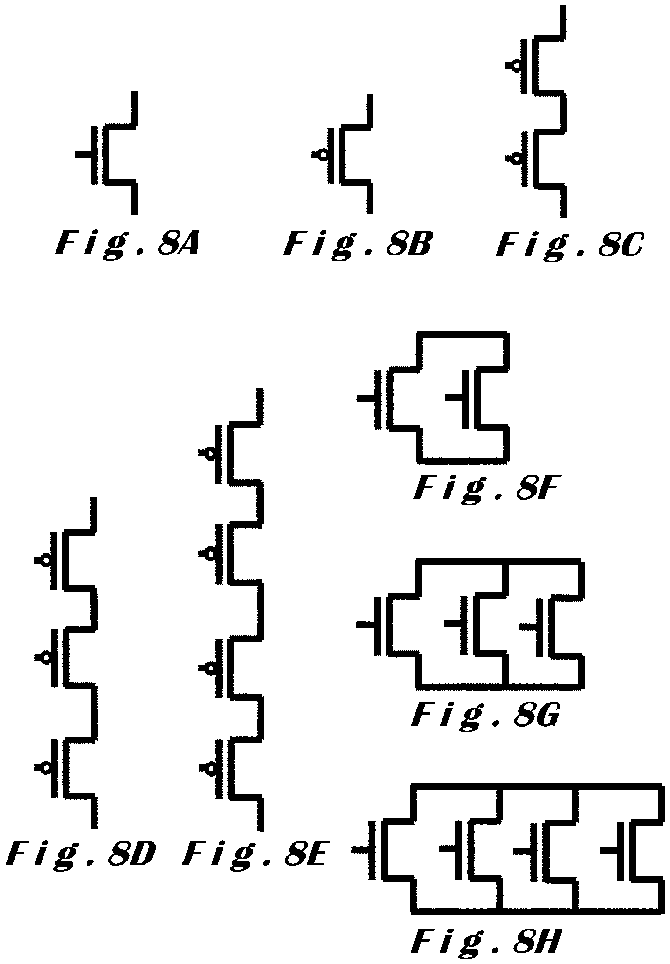

Figure 6A shows a detailed flowchart of how a variation factor of a basic structure is calculated, i.e. step 230 in the flowchart of Figure 2. In step 632, the variation factor is determined for a limited number of basic elements; examples of which are illustrated in Figures 8A to 8K. Specifically, the variation factor of a single PMOS transistor (illustrated in Figure 8B) is determined. This can be achieved by using a Monte-Carlo simulation to determine a distribution of the delay of a signal when crossing the single PMOS transistor. From this distribution, the mean delay $\mu$ and the standard deviation $\sigma$ can be determined. From these two values, the variation factor is known as the standard deviation divided by the mean delay, i.e. $\sigma/\mu$. Such a Monte-Carlo simulation is done for each PVT corner. As such, for each PVT corner, the variation factor of a single PMOS transistor, denoted as $(\sigma/\mu)_{1,1}$, is determined.

In the same way, the variation factor is simulated for two serial PMOS transistors (illustrated in Figure 8C), three serial PMOS transistors (illustrated in Figure 8D), four serial PMOS transistors (illustrated in Figure 8E), two parallel PMOS transistors, three parallel PMOS transistors, and four parallel PMOS transistors (not shown). In this embodiment, there are thus in total seven Monte-Carlo simulations, for each PVT corner, to determine the variation factor of seven basic elements, i.e. a single PMOS transistor, two, three and four serial PMOS transistors and two, three and four parallel PMOS transistors, in each PVT corner.

Step 632 further comprises performing another seven Monte-Carlo simulations, for each PVT corner, to determine the variation factor of seven basic elements, i.e. a single NMOS transistor (illustrated in Figure 8A), two, three and four serial NMOS transistors and two, three and four parallel NMOS transistors (illustrated in Figures 8F, 8G and 8H respectively), in each PVT corner.

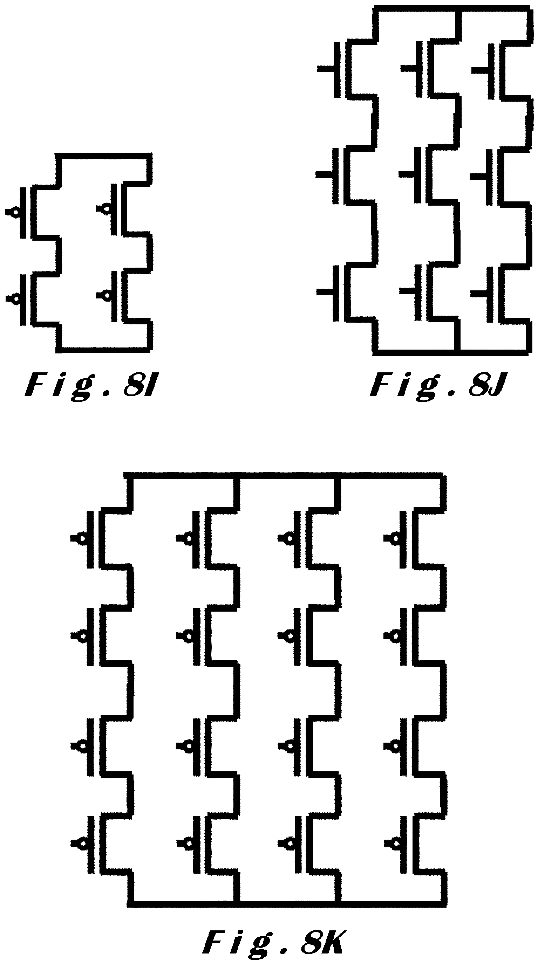

In an another embodiment, the variation factor of a different number of basic elements is determined using Monte-Carlo simulations. For example, up to eight serial and/or parallel PMOS or NMOS transistors. Moreover, it would also be possible to determine the variation factor of mixed transistor combinations, e.g. two serial and two parallel PMOS transistors (illustrated in Figure 8I), four serial and four parallel PMOS transistors (illustrated in Figure 8K) or three serial and three parallel NMOS transistors (illustrated in Figure 8J),.

From the examples described above with respect to Figures 3A to 5E, it will readily be understood that there are more possible basic structures than the number of basic elements. For example, a basic structure can have three serial transistors, which may not be a basic element for which the variation factor was simulated. The variation factor of each basic structure can be determined using conventional simulation methods, but this is time-consuming and requires large amounts of computer resources. As such, according to the present disclosure, the variation factor of the basic structures is derived from the variation factor of the basic elements, which thus avoids having to perform numerous Monte-Carlo simulations.

In step 634, the variation factor of the basic elements are used to determine fitting parameters that enable the determination of the variation factor of basic structures without having to perform a Monte-Carlo estimation of the basic structure. Specifically, it is known that the variation factor, $\sigma/\mu$, of a single transistor is inversely proportional to the square root of the area of the transistor. Therefore, when combining multiple transistors, i.e. effectively increasing the area of the transistors, this increased area can be linked to the variation factor.

From this observation, the variation factor of a basic structure having a number of active serial transistors $N_S$, i.e. transistors in series that are ON, and a number of active parallel transistors $N_P$, i.e. transistors in parallel that are ON, denoted by $(\sigma/\mu)_{Ns,Np}$, is related to the variation factor of a single transistor $(\sigma/\mu)_{1,1}$ by equation (1):

$$\left(\frac{\sigma}{\mu}\right)_{N_S,N_P} = \left(\frac{\sigma}{\mu}\right)_{1,1} N_P^{\rho_P} N_S^{\rho_S} \qquad (1)$$

where $\rho_P$ and $\rho_S$ are two fitting parameters. These fitting parameters depend on the PVT corner and on whether the basic structure comprises PMOS or NMOS transistors.

The fitting parameters $\rho_P$, $\rho_S$ are determined in step 634 based on the variation factors of the basic elements. Specifically, for each PVT corner, a known fitting method is used to determine $\rho_P$ based on the variation factor of the single PMOS or NMOS transistor in combination with the two, four and eight parallel PMOS or NMOS transistors. Similarly, using the same known fitting method, the fitting parameter $\rho_S$ is determined for each PVT corner based on the variation factor of the single PMOS or NMOS transistor in combination with the two, four and eight serial PMOS or NMOS transistors. The known fitting methods may include least squares fitting or root-mean-square fitting.

Once the values of the fitting parameters $\rho_P$, $\rho_S$ have been determined for each PVT corner, and for both PMOS and NMOS basic structures, the variation factor of the basic structure can be determined. This is done in step 636 which uses as input the fitting parameters $\rho_P$, $\rho_S$, the variation factor of a single PMOS or NMOS transistor $(\sigma/\mu)_{1,1}$, and the number of active serial and/or parallel transistors in the basic structure $N_S$, $N_P$. These values, in combination with equation (1) enable the determination of the variation factor of a basic structure by only using a limited number of Monte-Carlo estimations, e.g. fourteen, that determine the variation factor of the basic elements. This severely reduces the total simulation time that is needed to determine the variation factor of the basic structure, which, in turn, also decreases the time needed to determine the variation factor of the cell 100.

In the embodiment shown in Figure 6A, determining the variation factor of the basic elements and the fitting parameters is done for each cell.

In a preferred embodiment illustrated in Figure 6B, the variation factor of the basic elements and the fitting parameters are only derived once for each PVT corner for both PMOS and NMOS transistors by using the same method as described above. After having determined these values, the variation factor of a single PMOS or NMOS transistor together with the fitting parameters are stored in a memory.

Determining the variation factor of a basic structure (step 230 in Figure 2) then comprises retrieving the variation factor of a single PMOS or NMOS transistor $(\sigma/\mu)_{1,1}$ and the fitting parameters $\rho_P$, $\rho_S$ for the specific PVT corner of the cell 100 from the memory (step 635 in Figure 6B), and calculating the variation factor of the basic structure in the same way as step 636 in Figure 6A described above.

As described above, it is also possible that an input pattern comprises more than one basic structure, e.g. the input patterns illustrated in Figures 5B and 5C. For such a situation, the variation factor of one basic structure is determined first in the same way as step 636 in Figure 6A described above. In particular, in Figure 5B, the variation factor of the two parallel NMOS transistors 520, 522 is determined first; and, in Figure 5C, the variation factor of the two serial NMOS transistors 510, 512 is determined first. From this variation factor an PMOS or NMOS transistor with an equivalent size is determined, i.e. a single transistor which has a size such that it has a variation factor equal to the basic structure. The variation factor of the input pattern is then determined in the same way as step 636 in Figure 6A described above using the equivalent sized transistor with the other basic structure. In particular, in Figure 5B, the variation factor of two serial PMOS transistors (i.e. transistor 524 and the equivalent transistor) is then determined; and, in Figure 5C, the variation factor of the two parallel NMOS transistors (i.e. transistor 514 and the equivalent transistor) is determined. It will be appreciated that for more complex input patterns multiple equivalent transistors may have to be determined in order to determine the variation factor.

In an alternative embodiment, the fitting parameters $\rho_P$, $\rho_S$ are also dependent on the voltage and the temperature, i.e. $\rho_P(V,T)$, $\rho_S(V,T)$. In this alternative embodiment, the changes due to voltage and temperature are directly included in the fitting parameters. This has the advantage that fewer fitting parameters need to be stored in the memory. In particular, the fitting parameters only need to be stored depending on PMOS or NMOS transistors and the process of the transistor, i.e. the P value of the PVT corner.

Returning to Figure 2, the end result of step 230 is that, for the cell 100, for each PVT corner, a variation factor has been determined for each possible input pattern. As such, each cell 100 has, for each PVT corner, multiple variation factors. In particular, at least two variation factors as the inverter cell 300 (shown in Figure 3) is the simplest cell and has two basic structures. In step 240, these multiple values are then used to determine a delay value for the cell, which is usually the maximum crossing time, but can also be the minimum crossing time or both. Details of step 240 are shown in Figure 7.

Referring now to Figure 7, in step 742, the highest value of the multiple variation factors is determined. The highest variation factor is chosen as this indicates the broadest variation range of the cell 100.

In step 744, the highest variation factor is used to determine the maximum delay time by using equation (2):

$$delay_{max} = 1 + n\left(\frac{\sigma}{\mu}\right), \qquad (2)$$

where n is a natural number that can be chosen. Usually, n is taken as three as this then provides a 99.9% likelihood that a signal will cross the cell 100 faster than the maximum delay time. However, it will be appreciated that other values of n can also be used.

In an alternative embodiment, in step 742, the lowest variation factor is chosen, while in step 744 equation (3) is used to determine the minimum delay of the cell 100:

$$delay_{min} = 1 - n\left(\frac{\sigma}{\mu}\right), \qquad (3)$$

where n is a natural number that can be chosen. Usually, n is taken as three as this then provides a 99.9% likelihood that a signal will cross the cell 100 slower than the minimum delay time. However, it will be appreciated that other values of n can also be used.

Furthermore, it will readily be understood that average variation factors may also be used to determine average delay times. Moreover, because the variation factor of each input pattern is known, it is also possible to determine the expected delay for the most likely input pattern. Further, it would also be possible to determine the delay for each input pattern separately, in which case the AOCV table for the cell 100 includes very detailed information.

Returning again to Figure 2, in step 250, the delay (which can be multiple values as described above), for each PVT corner, is stored in a multidimensional matrix, i.e. the AOCV table of the cell 100. In this way, the AOCV table of a cell 100 can easily be transferred and/or distributed.

In an alternative embodiment, it would also be possible to provide only the variation factor of a single PMOS or NMOS transistor together with the fitting parameters, for each PVT corner, in a memory. After which, the AOCV table of a cell is generated only when needed. This conserves storage memory.

The method described above can also be used to determine the delay of entire cell libraries. Only the same basic elements need to be simulated from which the fitting parameters are determined. The fitting parameters in combination with the variation factor of a single NMOS or PMOS transistor are in turn used to determine the variation factor of the basic structures that form the various input patterns of various cells using equation 1. These are then used to determine the delay of the various cells that form the cell library. The AOCV table, i.e. the multi-dimensional matrix containing the delay of the cell in various conditions, can then be grouped into a single AOCV file holding the delay information for the entire cell library.

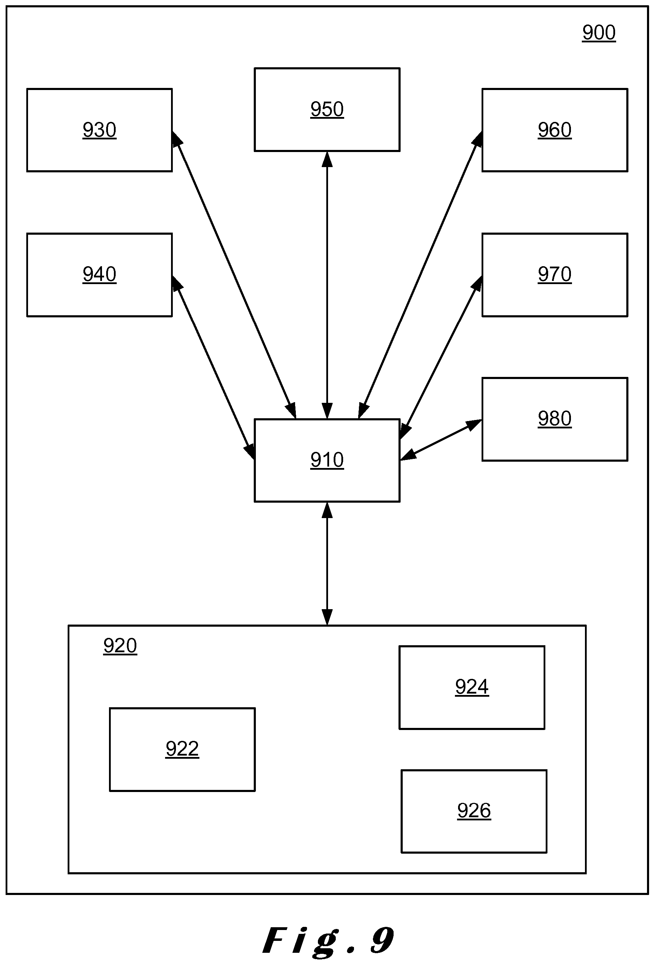

Figure 9 shows a system 900 for executing the method described above. The system 900 comprises a processor 910; a memory 920; a variation factor simulation module 930; a fitting parameter derivation module 940; an input pattern determination module 950; a basic structure association module 960; a variation factor derivation module 970; and a delay derivation module 980. The modules 930, 940, 950, 960, 970, 980 may comprise computer-readable instructions that are executable by the processor 910 and are stored in the memory 920. The memory 920 comprises a basic elements module 922; a fitting parameter module 924; and an AOCV table 926.

It will be appreciated that the processor 910 may include numerous processors split over different machines and may also comprise cloud-computing resources. Moreover, the memory 920 may also comprises various fixed and/or removable components split over different machines and optionally also cloud-storage resources.

The operation of the system 900 is as follows. The processor 910 retrieves the basic elements for which the variation factor needs to be simulated from the basic elements module 922 in the memory 920. The variation factor simulation module 930 then uses the processor 910 to simulate the variation factor for all the basic elements. The variation factor of a single NMOS or PMOS transistor, $(\sigma/\mu)_{1,1}$, are then stored in the fitting parameter module 924 in the memory 920. The fitting parameter derivation module 940 uses the variation factors that were simulated in combination with a known fitting method to determine the fitting parameters, $\rho_P$, $\rho_S$, for each PVT corner for both NMOS and PMOS transistors, which fitting parameters, $\rho_P$, $\rho_S$, are then stored in the fitting parameter module 924 in the memory 920. As described above, the variation factor of a single NMOS or PMOS transistor and the fitting parameters, for each PVT corner, need only be derived once.

To determine an AOCV table of a cell, the input pattern determination module 950 will use the processor 910 to determine the possible input patterns of the cell and the basic structure association module 960 will associate each input pattern with at least one basic structure. Using the variation factor of a single NMOS or PMOS transistor, $(\sigma/\mu)_{1,1}$, and the fitting parameters, $\rho_P$, $\rho_S$, stored in the fitting parameter module 924 in the memory 920, the variation factor derivation module 970, using the processor 910, derives the variation factor of each input pattern, for each PVT corner, by using equation (1). The delay derivation module 980 then uses the processor 910 to determine the delay, for each PVT corner, either the maximum, the minimum or both depending on the application, by using equations (2) and (3). The delay is then stored in the AOCV table 926 in the memory 920.

It will be appreciated that the system 900 can be used to determine an AOCV table of an entire cell library. As such, the memory 920 may also comprise an AOCV file that combines numerous AOCV tables.

Although aspects of the present disclosure have been described with respect to specific embodiments, it will be readily appreciated that these aspects may be implemented in other forms.

## Claims

1. A computer-implemented method (200) for generating an advanced-on-chip-variation, AOCV, table of a cell (100), the method comprising the steps of:

   a) simulating (632) a variation factor, $\sigma/\mu$, for each of a plurality of basic elements;
   b) determining (210) a plurality of input patterns of the cell (100);
   c) associating (220) each input pattern with a basic structure that represents the cell (100) for said input pattern;
   d) deriving (230; 630) a variation factor, $\sigma/\mu$, of the basic structure of each input pattern based on the variation factors of the plurality of basic elements;
   e) deriving (240; 740) a delay of the cell (100) based on the variation factor of each of the plurality of input patterns; and
   f) storing (250) the delay of the cell (100) in a multidimensional matrix that forms the AOCV table of the cell (100).

2. A computer-implemented method (200) according to claim 1, **characterised in that** step a) comprises the steps of:

   a1) obtaining a distribution of a delay of each basic element;
   a2) deriving, from the distribution, a mean factor, $\mu$, for each basic element; and
   a3) deriving, from the distribution, a standard deviation factor, $\sigma$, for each basic element.

3. A computer-implemented method (200) according to claim 2, **characterised in that** step a1) comprises the step of performing a Monte-Carlo simulation for each basic element to obtain the distribution of the delay.

4. A computer-implemented method (200) according to any one of the preceding claims, **characterised in that** step d) comprises the step of deriving fitting parameters, $\rho_P$, $\rho_S$, based on the variation factors of the basic elements.

5. A computer-implemented method (200) according to claim 4, **characterised in that** step d) further comprises the steps of:

   retrieving (635) the variation factor of a single transistor, $(\sigma/\mu)_{1,1}$, and the fitting parameters, $\rho_P$, $\rho_S$; and
   calculating (636) the variation factor of the basic structure using the formula:

$$\left(\frac{\sigma}{\mu}\right)_{N_S,N_P} = \left(\frac{\sigma}{\mu}\right)_{1,1} N_P^{\rho_P} N_S^{\rho_S}$$

where $N_S$ indicates the number of active serial transistors in the basic structure and $N_P$ denotes the number of active parallel transistors in the basic structure.

**6.** A computer-implemented method (200) according to any one of the preceding claims, **characterised in that** step e) comprises the steps of:

determining (742) the highest value of the of variation factor of the plurality of input patterns; and
calculating the delay as a maximum delay time using the formula:

$$delay_{max} = 1 + n\left(\frac{\sigma}{\mu}\right)$$

where n is a pre-set natural number.

**7.** A computer-implemented method (200) according to any one of claims 1 to 5, **characterised in that** step e) comprises the steps of:

determining (742) the lowest value of the of variation factor of the plurality of input patterns; and
calculating the delay as a minimum delay time using the formula:

$$delay_{min} = 1 - n\left(\frac{\sigma}{\mu}\right)$$

where n is a pre-set natural number.

**8.** A computer-implemented method (200) according to any one of the preceding claims, **characterised in that** said basic structure comprises at least a first and a second basic structure, and **in that** step d) comprises the steps of:

deriving a first variation factor of the first basic structure;
deriving a second variation factor of the second basic structure; and
deriving the variation factor of the basic structure based on the first and the second variation factor.

**9.** A non-transitory computer readable medium storing a computer program for causing a computer, when loaded thereon, to execute the steps of the method according to any one of the preceding claims.

*F i g . 1*

*F i g . 2*

Fig. 3A

Fig. 3B

Fig. 3C

*Fig. 4A*

*Fig. 4B*

*F i g . 4C*

*F i g . 4D*

*F i g . 4E*

Fig. 5A

Fig. 5B

500

530 ⊸ 510

534 ⊸ 514

532 ⊸ 512

540

*F i g . 5C*

500

530 ⊸ 510

532 ⊸ 512

540

*F i g . 5D*

540

534 — 524

530 — 520

500

*F i g . 5E*

630

632

634

$N_s, N_p$ → 636

**Fig. 6A**

630

635

$N_s, N_p$ → 636

**Fig. 6B**

740

742

744

**Fig. 7**

Fig.8A

Fig.8B

Fig.8C

Fig.8F

Fig.8G

Fig.8D Fig.8E

Fig.8H

Fig. 8I

Fig. 8J

Fig. 8K

900

930

950

960

940

970

910

980

920

924

922

926

*Fig. 9*

Europäisches
Patentamt

European
Patent Office

Office européen
des brevets

# EUROPEAN SEARCH REPORT

Application Number

EP 16 20 2854

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2008/120584 A1 (BECER MURAT R [US] ET AL) 22 May 2008 (2008-05-22) * paragraphs [0007], [0012], [0014], [0037] - [0038], [0041], [0043] * * the whole document * | 1-9 | INV. G06F17/50 |
| Y | US 8 656 331 B1 (SUNDARESWARAN SAVITHRI [US] ET AL) 18 February 2014 (2014-02-18) * column 1 - column 2 * * the whole document * | 1-9 | |
| A | US 2010/242007 A1 (YODA TOMOYUKI [JP]) 23 September 2010 (2010-09-23) * paragraphs [0006], [0013], [0068], [0089] * * the whole document * | 1-9 | |

TECHNICAL FIELDS
SEARCHED       (IPC)

G06F

The present search report has been drawn up for all claims

| Place of search | Date of completion of the search | Examiner |
|---|---|---|
| Munich | 24 May 2017 | Dapp, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 20 2854

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2017

| Patent document cited in search report | | Publication date | Patent family member(s) | | Publication date |
|---|---|---|---|---|---|
| US 2008120584 | A1 | 22-05-2008 | NONE | | |
| US 8656331 | B1 | 18-02-2014 | NONE | | |
| US 2010242007 | A1 | 23-09-2010 | JP 2010218252 A | | 30-09-2010 |
| | | | US 2010242007 A1 | | 23-09-2010 |